# EUROPÄISCHE PATENTSCHRIFT

(11) **EP 1 508 487 B1**
(45) Veröffentlichungstag und Bekanntmachung des Hinweises auf die Patenterteilung: **17.06.2009**
(21) Anmeldenummer: 03018855.1
(22) Anmeldetag: 19.08.2003
(51) Int. Cl.: B60R 21/20

(54) **Airbagmodul**
Airbag module
Module de coussin gonflable

(43) Veröffentlichungstag der Anmeldung: 23.02.2005
(73) Patentinhaber: Delphi Technologies, Inc., Troy, MI 48007 (US)
(72) Erfinder: Guthke, Detlev, 58089 Hagen (DE)
(74) Vertreter: Denton, Michael John

(56) Entgegenhaltungen:
- US-A- 5 460 408
- US-A- 5 642 900
- US-A- 5 826 913
- PATENT ABSTRACTS OF JAPAN vol. 016, no. 129 (M-1228), 2. April 1992 (1992-04-02) -& JP 03 292236 A (ASAHI CHEM IND CO LTD), 24. Dezember 1991 (1991-12-24)

## Beschreibung

Die Erfindung betrifft ein Luftsackmodul für Kraftfahrzeuge mit zumindest einem Luftsack, der eine Luftsackhülle und wenigstens eine in der Luftsackhülle ausgebildete Montageöffnung zum Hindurchführen wenigstens eines Teils eines Gasgenerators umfasst.

Derartige Luftsackmodule sind in vielfacher Form bekannt und finden beispielsweise in einem Fahrer-, Beifahrer- oder Seitenairbag Verwendung. Bei diesen bekannten Luftsackmodulen wird der Gasgenerator bei der Herstellung des Moduls über eine Montageöffnung in der Luftsackhülle wenigstens teilweise in den Luftsack eingeführt, um im Falle eines Aufpralls den Luftsack zum Schutz der Fahrzeuginsassen aufzublasen.

Ein derartiger Luftsackmodule ist aus den US 5 642 900 A gemäß der Oberbegriff des Anspruchs 1 bekannt.

Die bekannten Luftsackmodule besitzen jedoch den Nachteil, dass beim Aufblasen des Luftsacks durch die zwingend notwendige Montageöffnung Gas nach außen entweichen kann, so dass das Aufblasverhalten des Luftsacks beeinträchtigt ist. Das Entweichen des Gases durch die Montageöffnung ist insbesondere deshalb unerwünscht, da das durch die Montageöffnung entweichende Gas nicht zum Aufblasen des Luftsacks zur Verfügung steht, weshalb der Gasgenerator überdimensioniert werden muss, um ausreichend schnell einen genügend großen Druck erzeugen zu können.

Die Überdimensionierung des Gasgenerators erhöht den Platzbedarf, was von Nachteil ist, da das Platzangebot für Luftsackmodule in Kraftfahrzeugen sehr gering ist und in Zukunft noch geringer werden kann, um einen höheren Freiheitsgrad für die Gestaltung beispielsweise des Innenraums oder der Karosserie zu gewährleisten.

Es ist das der Erfindung zugrunde liegende Problem (Aufgabe), ein Luftsackmodul der eingangs genannten Art zu schaffen, bei dem das Problem der Gasentweichung durch die Montageöffnung zumindest weitgehend beseitigt und das gleichzeitig bei sicherer und zuverlässiger Funktionsweise schnell und einfach herstellbar ist.

Die Lösung dieser Aufgabe erfolgt durch die Merkmale des Anspruchs 1 und insbesondere dadurch, dass die Luftsackhülle wenigstens zwei zumindest bereichsweise übereinander liegende Lagen aufweist, in denen Einschnitte oder Schlitze vorgesehen sind, die gemeinsam die Montageöffnung bilden, wobei die Einschnitte oder Schlitze unterschiedlich orientiert und/oder gegeneinander versetzt sind.

Bei dem erfindungsgemäßen Luftsackmodul ist vorgesehen, dass die Montageöffnung durch Einschnitte oder Schlitze gebildet ist, die unterschiedlich orientiert und/oder gegeneinander versetzt sind. Die Luftsackhülle ist in dem die Montageöffnung umfassenden Bereich mehrlagig ausgeführt. Das erfindungsgemäße Luftsackmodul zeichnet sich dadurch aus, dass die jeweils von den Einschnitten bzw. Schlitzen gebildeten lang gestreckten Durchlässe nicht deckungsgleich übereinander angeordnet sind, wodurch insgesamt ein labyrinthartiger Durchgang entsteht.

Das erfindungsgemäße Luftsackmodul besitzt den Vorteil, dass die Einschnitte oder Schlitze einer Lage durch benachbarte Lagen abgedeckt sind. Eine beim Aufblasen.des Luftsacks durch die Montageöffnung entweichende Gasmenge kann durch die versetzte und/oder unterschiedlich orientierte Anordnung der Einschnitte oder Schlitze zumindest reduziert werden, so dass eine erhöhte Dichtigkeit der Montageöffnung des Luftsacks gegeben ist. Versuche haben gezeigt, dass es mit einer erfindungsgemäßen Montageöffnung prinzipiell möglich ist, eine derart hohe Dichtigkeit zu erzielen, dass die entweichende Gasmenge praktisch vernachlässigt werden kann. Dennoch ist es problemlos möglich, die von den Schlitzen bzw. Einschnitten gebildete Montageöffnung zum Hindurchführen des Gasgenerators mit der Hand bzw. den Fingern aufzuweiten, sofern dies überhaupt erforderlich ist und der Gasgenerator nicht direkt durchgesteckt werden kann. Die Aufweitung der Montageöffnung kann auch durch ein separates Aufweitewerkzeug erfolgen, das zusätzlich nach Art eines "Schuhanziehers" wirksam werden kann, um das Ein- und Hindurchführen des Gasgenerators durch die Luftsackhülle zu erleichtern.

Das erfindungsgemäße Luftsackmodul zeichnet sich dadurch aus, dass der Gasgenerator Platz sparend im Inneren des Luftsacks bei gleichzeitig hoher Dichtigkeit der Montageöffnung angeordnet werden kann.

Dies ermöglicht es insbesondere, dass entweder ein gegenüber den bekannten Luftsackmodulen ein geringeres Gasvolumen erzeugender Gasgenerator, bei dem kein durch die Montageöffnung entweichendes Gas kompensiert werden muss, oder ein gegenüber den bekannten Gasgeneratoren gleich dimensionierter Gasgenerator eingesetzt werden kann, wodurch der Luftsack schneller und mit größerem Druck aufgeblasen werden kann.

Vorteilhafte Ausführungsformen der Erfindung sind in den Unteransprüchen, der Beschreibung und der Zeichnung angegeben.

Gemäß einer vorteilhaften Weiterbildung der Erfindung sind die Einschnitte oder Schlitze wenigstens in einem Punkt einander überkreuzend angeordnet. Hierdurch kann erreicht werden, dass bei der Montage des Gasgenerators die Lagen der Luftsackhülle allenfalls geringfügig gegeneinander verschoben werden müssen, um die Einschnitte oder Schlitze derart übereinander anzuordnen, dass eine einfache Durchführung des Gasgenerators bzw. eines Teils davon ermöglicht wird.

Eine weitere vorteilhafte Ausführungsform zeichnet sich dadurch aus, dass die Einschnitte oder Schlitze übereinander liegender Lagen alternierend in eine erste Richtung und eine zweite, um einen Winkel insbesondere von 90 Grad gegenüber der ersten Richtung gedrehte Richtung orientiert sind. Auf diese Weise kann der Fertigungsablauf vereinfacht werden, da bei der Montage der Luftsackhülle lediglich zwischen genau zwei bezüglich der Richtung der Einschnitte oder Schlitze unterschiedlichen Lagen unterschieden werden muss.

Um bei wenigstens dreilagig ausgeführter Luftsackhülle eine möglichst einfach zu öffnende Montageöffnung zu erhalten, können die Einschnitte oder Schlitze übernächst benachbarter Lagen zumindest bereichsweise deckungsgleich ausgebildet sein, wobei die Einschnitte oder Schlitze benachbarter Lagen wenigstens in einem Punkt, insbesondere den Mittelpunkten der Einschnitte oder Schlitze, einander überkreuzend angeordnet sind.

Des Weiteren kann erfindungsgemäß vorgesehen sein, dass die Einschnitte oder Schlitze zumindest im Wesentlichen geradlinig ausgebildet sind. Die Herstellung der Montageöffnung ist hierdurch besonders einfach. Auf diese Weise können außerdem bei einer vorgegebenen Aufweitung der Montageöffnung, die die Durchführung des Gasgenerators erlaubt, eine kleinstmögliche Gesamtlänge des jeweiligen Einschnittes oder Schlitzes, d.h. eine maximale Aufweitung bei minimaler Einschnitt- oder Schlitzlänge und damit eine größtmögliche Dichtigkeit erreicht werden.

Vorzugsweise ist vorgesehen, dass die übereinander liegenden Lagen des die Montageöffnung umfassenden Bereiches der Luftsackhülle durch zumindest ein Befestigungsmittel, insbesondere eine Naht, miteinander verbunden sind. Das Befestigungsmittel gewährleistet, dass die übereinander liegenden Lagen nicht beliebig weit gegeneinander verschiebbar sind.

Es ist weiterhin bevorzugt, dass der die Montageöffnung umfassende Bereich der Luftsackhülle durch das Befestigungsmittel vollständig von der übrigen Luftsackhülle abgetrennt ist.

Zum Schutz des Luftsacks beim Auslösen des Gasgenerators kann zumindest eine Lage der Luftsackhülle als Hitzeschild und/oder Diffusor ausgebildet sein.

Die Luftsackhülle kann zumindest eine Durchführung für wenigstens einen insbesondere laschenartigen Befestigungsabschnitt des Gasgenerators aufweisen. Dabei ist bevorzugt vorgesehen, dass wenigstens eine Durchführung mit der Montageöffnung zusammenfällt. Auf diese Weise wird die Montageöffnung gleichzeitig zum Durchführen des Befestigungsabschnittes genutzt und so erreicht, dass die zum Einführen und zur Befestigung des Gasgenerators notwendigen Öffnungen in der Luftsackhülle auf eine fertigungsfreundliche, möglichst geringe Anzahl reduziert werden können.

Die Durchführung kann ferner zumindest in einer Lage der Luftsackhülle einen zusätzlichen Einschnitt oder Schlitz umfassen, der in eine um einen Winkel insbesondere von 90 Grad gegenüber dem in dieser Lage ausgebildeten Einschnitt oder Schlitz gedrehte Richtung orientiert ist. Hierdurch kann erreicht werden, dass übereinander liegende Lagen zur Aufnahme des Befestigungsabschnittes des Gasgenerators in der Durchführung in eine gemeinsame Richtung eingeschnitten oder geschlitzt werden können, d.h. die zusätzlichen Einschnitte oder Schlitze für die Befestigungsabschnitte können deckungsgleich übereinander angeordnet sein, was hinsichtlich der Dichtigkeit unkritisch ist, solange die zusätzlichen Einschnitte bzw. Schlitze vergleichsweise kurz ausgeführt sind.

Die Erfindung wird im Folgenden beispielhaft unter Bezugnahme auf die Zeichnung beschrieben. Es zeigen:
- Fig. 1: eine schematische Seitenansicht eines ausgebreiteten erfindungsgemäßen Luftsacks mit einer Montageöffnung, zwei Durchführungen und einem die Montageöffnung und die Durchführungen umfassenden mehrlagigen Bereich der Luftsackhülle,
- Fig. 2: eine schematische Draufsicht des Luftsacks von Fig. 1 in einem anderen ausgebreiteten Zustand,
- Fig. 3a und 3b: schematische Explosionszeichnungen eines die Montageöffnung umfassenden Bereichs der Luftsackhülle gemäß der Erfindung, und
- Fig. 4: eine schematische Seitenansicht eines Teils des Luftsacks von Fig. 1 mit einem innerhalb der Luftsackhülle angeordneten Gasgenerator und nach außen geführten Befestigungsabschnitten.

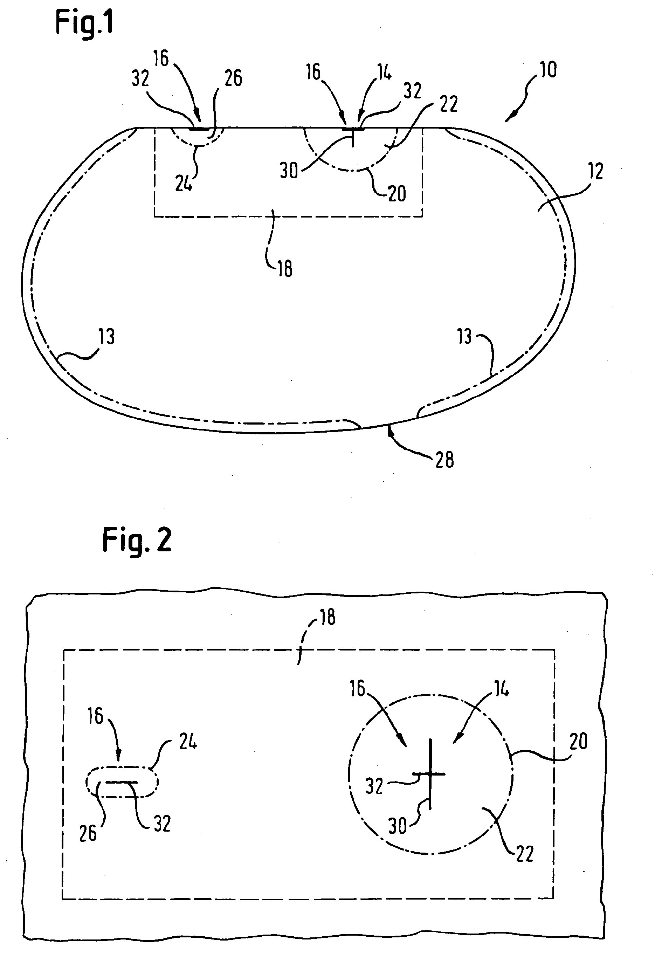

Der in Fig. 1 gezeigte erfindungsgemäße Luftsack 10 umfasst eine Luftsackhülle 12, deren äußerste Lage durch Vernähen zweier zusammenhängender, übereinander liegender Gewebelagenabschnitte mittels einer Randnaht 13 gebildet ist, eine Montageöffnung 14 zum Hindurchführen eines in Fig. 1 nicht dargestellten Gasgenerators, die mit einer Durchführung 16 zur Aufnahme eines Befestigungsabschnittes eines Gasgenerators zusammenfällt, eine weitere Durchführung 16 sowie einen die Montageöffnung 14 und die weitere Durchführung 16 umfassenden vierlagigen Bereich 18 der Luftsackhülle 12.

Der vierlagige Bereich 18 ist durch die äußerste Lage der Luftsackhülle 12 und drei übereinander liegende, innerhalb der äußersten Lage angeordnete innere Lagen gebildet. Eine oder mehrere der inneren Lagen des vierlagigen Bereichs 18 sind zum Schutz des Luftsacks 10 beim Auslösen des Gasgenerators als Hitzeschild ausgebildet. Die inneren Lagen können eine voneinander abweichende Form und/oder Größe aufweisen.

Die übereinander liegenden Lagen des vierlagigen Bereichs 18 sind durch eine erste Naht 20, die einen die Montageöffnung 14 umfassenden ersten Bereich 22 der Luftsackhülle 12 vollständig von der übrigen Luftsackhülle 12 abtrennt, und eine zweite Naht 24, die einen die weitere Durchführung 16 umfassenden zweiten Bereich 26 der Luftsackhülle 12 vollständig von der übrigen Luftsackhülle 12 abtrennt, miteinander verbunden. Der Luftsack 10 weist weiterhin eine Ausströmöffnung 28 auf, durch die in den Luftsack 10 eingeblasenes Gas aus dem Luftsack 10 nach außen entweichen kann.

Fig. 2 zeigt den vierlagigen Bereich 18 in einem im Vergleich zu Fig. 1 anderen ausgebreiteten Zustand des Luftsacks 10, der sich dadurch auszeichnet, dass die Bereiche 22, 26 vollständig ausgebreitet sind, während sie in dem Zustand gemäß Fig. 1 mittig gefaltet sind. Fig. 2 zeigt insbesondere, dass die Nähte 20, 24 geschlossene Nähte sind, die jeweils die Montageöffnung 14 bzw. den Durchgang 16 vollständig umgeben.

Die übereinander liegenden Lagen des vierlagigen Bereichs 18 weisen lang gestreckte Durchlässe 30 auf, die in diesem Ausführungsbeispiel in Form von Einschnitten oder Schlitzen 30 vorgesehen sind, die gemeinsam die Montageöffnung 14 bilden, wobei in den Fig. 1 und 2 lediglich der Einschnitt bzw. Schlitz 30 der äußersten Lage gezeigt ist. Die Einschnitte oder Schlitze 30 der einzelnen Lagen sind geradlinig ausgebildet. Im Folgenden werden der Einfachheit halber die Durchlässe 30 lediglich als Einschnitte bezeichnet.

Die übereinander liegenden Lagen weisen weiterhin zusätzliche Einschnitte 32 zum Hindurchführen der Befestigungsabschnitte des Gasgenerators auf, wobei in den Fig. 1 und 2 wiederum lediglich die zusätzlichen Einschnitte 32 der äußersten Lage gezeigt sind.

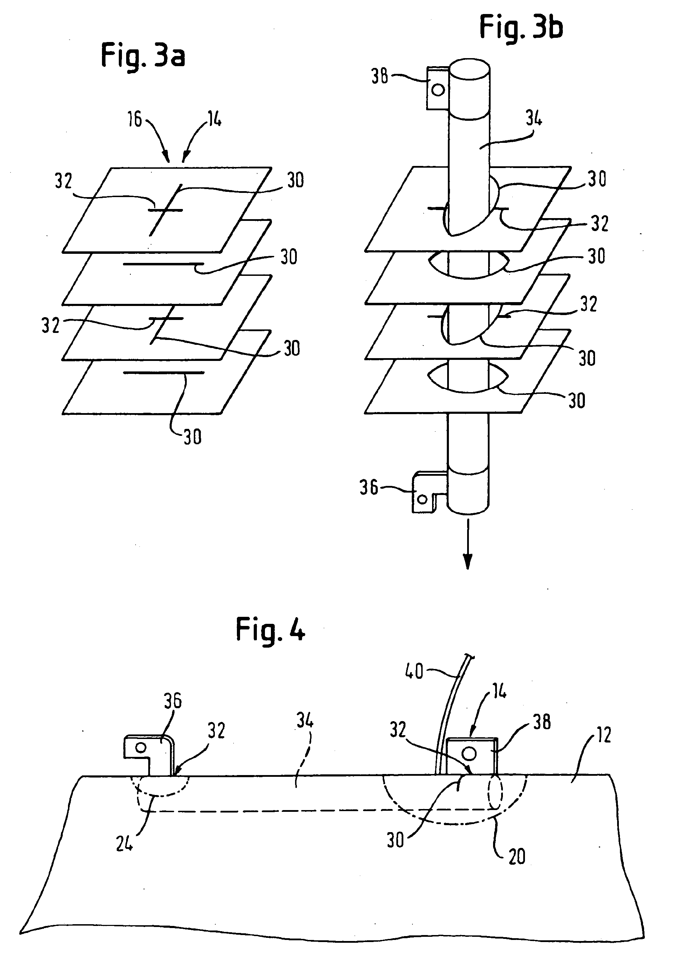

Gemäß dem Ausführungsbeispiel in Fig. 3a sind die Einschnitte 30 übereinander liegender Lagen alternierend quer in eine erste Richtung und längs in eine zweite, um 90 Grad gegenüber der ersten Richtung gedrehte Richtung orientiert. Die Einschnitte 30 der äußersten Lage und der zur äußersten Lage übernächsten Lage sowie der innersten Lage und der zur innersten Lage übernächsten Lage sind dabei jeweils deckungsgleich ausgebildet. Die rechtwinklig zueinander verlaufenden Einschnitte 30 benachbarter Lagen überkreuzen einander in den Mittelpunkten der Einschnitte 30.

Durch die zur Bildung der Montageöffnung 14 alternierend längs und quer eingeschnittenen Lagen entsteht ein Schlitzkreuz und damit ein labyrinthartiger Durchgang zum Hindurchführen des Gasgenerators bzw. eines Teils davon.

Die in dem die Montageöffnung 14 umfassenden Bereich 22 ausgebildeten zusätzlichen Einschnitte 32 der äußersten Lage und der zur äußersten Lage übernächsten Lage sind gegenüber dem in der jeweiligen Lage ausgebildeten Einschnitt 30 um 90 Grad gedreht. Die zusätzlichen Einschnitte 32 dieser beiden Lagen überkreuzen sich mit den Einschnitten 30 der jeweiligen Lage und verlaufen jeweils parallel zu den Einschnitten 30 der benachbarten Lage bzw. Lagen.

Die in dem Bereich 22 ausgebildeten Einschnitte 30 der innersten Lage und der zur innersten Lage übernächsten Lage und die in dem Bereich 22 ausgebildeten zusätzlichen Einschnitte 32 der äußersten Lage und der zur äußersten Lage übernächsten Lage bilden gemeinsam die mit der Montageöffnung 14 zusammenfallende Durchführung 16 für einen Befestigungsabschnitt des Gasgenerators. Die weitere Durchführung 16 (Fig. 1, 2), die nicht mit der Montageöffnung 14 zusammenfällt, wird durch vier deckungsgleiche zusätzliche Einschnitte 32 in den übereinander liegenden Lagen gebildet.

Nachfolgend wird der das Einbringen des Gasgenerators in die Luftsackhülle umfassende Schritt der Herstellung bzw. des Zusammensetzens des erfindungsgemäßen Luftsackmoduls unter zusätzlicher Bezugnahme auf die Fig. 3b und 4 beschrieben, wobei in den Fig. 3a und 3b die Lagen nur der Anschaulichkeit halber weit voneinander beabstandet dargestellt sind.

Den Ausgangspunkt bildet der in Fig. 1 gezeigte ausgebreitete Zustand des Luftsacks 10. Die Montageöffnung 14 ist durch die bezüglich der Richtung der Einschnitte 30 alternierende Anordnung der Lagen verschlossen.

Vor dem Einbringen des Gasgenerators wird der einfachen Handhabbarkeit der Montageöffnung 14 halber der Luftsack 10 im Bereich der Montageöffnung 14 in den ausgebreiteten Zustand gemäß Fig. 2 überführt, wobei die Montageöffnung 14 weiterhin verschlossen ist.

Zum Öffnen der Montageöffnung 14 wird mit den Fingern in den durch die Einschnitte 30 gebildeten labyrinthartigen Durchgang eingegriffen, um die Montageöffnung 14 aufzuweiten. Unter Zuhilfenahme weiterer Finger, gegebenenfalls beider Hände, kann die bereits teilweise aufgeweitete Montageöffnung 14 weiter vergrößert werden, so dass das Durchführen des Gasgenerators 34 (Fig. 3b) ermöglicht wird. Es hat sich gezeigt, dass die Montageöffnung 14 durch das Eingreifen mit einem oder mehreren Fingern auf überraschend einfache Weise ausreichend weit geöffnet werden kann. Die Montageöffnung 14 kann jedoch auch durch ein nicht dargestelltes separates Aufweitemittel aufgeweitet werden, das gleichzeitig als Schuhanzieher dienen und das Einführen des Gasgenerators 34 in den Luftsack 10 erleichtern kann.

Der Gasgenerator 34 wird dann mit seinem einen laschenartigen Befestigungsabschnitt 36 aufweisenden vorderen Teil voran durch die aufgeweitete Montageöffnung 14 in den Luftsack 10 eingeführt. Der vordere Befestigungsabschnitt 36 wird innerhalb des Luftsacks 10 bis zur weiteren Durchführung 16 gelenkt und durch die weitere Durchführung 16 der Luftsackhülle 12 nach außen geführt.

Ist der zur Befestigung des Gasgenerators 34 dienende Befestigungsabschnitt 36 des Gasgenerators 34 durch die weitere Durchführung 16 nach außen geführt, wird der Luftsack 10 derart über den gesamten Gasgenerator 34 gezogen, dass zusätzlich zu dem vorderen Befestigungsabschnitt 36 nur noch ein laschenartiger hinterer Befestigungsabschnitt 38 des Gasgenerators 34 durch die mit der Montageöffnung 14 zusammenfallende Durchführung 16 nach außen ragt, wie in Fig. 4 veranschaulicht ist. Dabei kann der Gasgenerator 34 am vorderen Befestigungsabschnitt 36 festgehalten werden, um ein Abtauchen des vorderen Teils des Gasgenerators 34 zurück in das Innere des Luftsacks 10 zu verhindern.

Anschließend wird die Montageöffnung 14 - sofern überhaupt erforderlich - durch Zusammenschieben oder Zurechtrücken der Lagen, beispielsweise mit den Fingern, wieder verschlossen, wobei zusätzlich zu dem hinteren Befestigungsabschnitt 38 eine Anschlussleitung 40 zum Auslösen des Gasgenerators 34 durch die mit der Montageöffnung 14 zusammenfallende Durchführung 16 nach außen geführt ist. Je nach Beschaffenheit der die Luftsackhülle 12 in dem mehrlagigen Bereich 18 bildenden Lagen und der Durchlässe 30, 32 kann es sein, dass ein aktives Verschließen der Montageöffnung 14 und der Durchführung 16 nicht erforderlich ist, sondern die Luftsackhülle 12 bestrebt ist, von selbst wieder den Ausgangszustand einzunehmen, d.h. dass die Montageöffnung 14 und die Durchführung 16 gewissermaßen selbst verschließend ausgeführt sind.

Die Durchführung 16 der Luftsackhülle 12 fällt mit der Montageöffnung 14 insofern zusammen, als der laschenartige hintere Befestigungsabschnitt 38 durch die Einschnitte 30 der innersten Lage und der zur innersten Lage übernächsten Lage sowie der zusätzlichen Einschnitte 32 der äußersten Lage und der zur äußersten Lage übernächsten Lage nach außen geführt ist. Die Einschnitte 30 der innersten Lage und der zur innersten Lage übernächsten Lage übernehmen damit eine Doppelfunktion, da sie sowohl das Einführen des Gasgenerators 34 in den Luftsack 10 ermöglichen als auch den hinteren Befestigungsabschnitt 38 aufnehmen.

Die Orientierung der zusätzlichen Einschnitte 32 der übereinander liegenden Lagen, durch die die Durchführungen 16 gebildet sind, kann an die jeweilige Orientierung der laschenartigen Befestigungsabschnitte 36, 38 angepasst werden, um den Luftsack in den Bereichen 22, 26 möglichst dicht zu verschließen. Die zusätzlichen Einschnitte 32 sind gegenüber den Einschnitten 30 verkürzt ausgeführt und können an die Länge des jeweiligen Befestigungsabschnitts 36, 38 angepasst werden. Die Längen der Einschnitte 30 können insbesondere ein Vielfaches der Längen der zusätzlichen Einschnitte 32 betragen.

Ein erfindungsgemäßes Luftsackmodul mit einem - abgesehen von den Befestigungsabschnitten 36, 38 - vollständig innerhalb der Luftsackhülle 12 angeordneten Gasgenerator 34 weist in dem in Fig. 4 dargestellten Endzustand eine im Bereich der Montageöffnung 14 praktisch dichte Luftsackhülle 12 auf, so dass das von dem Gasgenerator 34 ausgestoßene Gas lediglich durch die eigens zu diesem Zweck vorgesehene Ausströmöffnung 28 (Fig. 1) entweichen kann.

### Bezugszeichenliste

- 10: Luftsack
- 12: Luftsackhülle
- 13: Randnaht
- 14: Montageöffnung
- 16: Durchführung
- 18: vierlagiger Bereich
- 20: erste Naht
- 22: erster Bereich
- 24: zweite Naht
- 26: zweiter Bereich
- 28: Ausströmöffnung
- 30: Einschnitt
- 32: zusätzlicher Einschnitt
- 34: Gasgenerator
- 36: vorderer Befestigungsabschnitt
- 38: hinterer Befestigungsabschnitt
- 40: Anschlussleitung

## Patentansprüche

1. Luftsackmodul für Kraftfahrzeuge mit zumindest einem Luftsack (10), der eine Luftsackhülle (12) und wenigstens eine in der Luftsackhülle (12) ausgebildete Montageöffnung (14) zum Hindurchführen wenigstens eines Teils eines Gasgenerators (34) umfasst, wobei
die Luftsackhülle (12) wenigstens zwei zumindest bereichsweise übereinander liegende Lagen aufweist, in denen Einschnitte oder Schlitze (30) vorgesehen sind, die gemeinsam die Montageöffnung (14) bilden, **dadurch gekennzeichnet, dass** die Einschnitte oder Schlitze (30) unterschiedlich orientiert und/oder gegeneinander versetzt sind.

2. Luftsackmodul nach Anspruch 1,
**dadurch gekennzeichnet,**
**dass** die Einschnitte oder Schlitze (30) wenigstens in einem Punkt einander überkreuzend angeordnet sind.

3. Luftsackmodul nach Anspruch 1 oder 2,
**dadurch gekennzeichnet,**
**dass** die Einschnitte oder Schlitze (30) übereinander liegender Lagen alternierend in eine erste Richtung und eine zweite, um einen Winkel insbesondere von 90 Grad gegenüber der ersten Richtung gedrehte Richtung orientiert sind.

4. Luftsackmodul nach einem der vorhergehenden Ansprüche,
**dadurch gekennzeichnet,**
**dass** die Einschnitte oder Schlitze (30) übernächst benachbarter Lagen zumindest bereichsweise deckungsgleich ausgebildet sind, wobei die Einschnitte oder Schlitze (30) benachbarter Lagen wenigstens in einem Punkt, insbesondere den Mittelpunkten der Einschnitte oder Schlitze (30), einander überkreuzend angeordnet sind.

5. Luftsackmodul nach einem der vorhergehenden Ansprüche,
**dadurch gekennzeichnet,**
**dass** die Einschnitte oder Schlitze (30) zumindest im Wesentlichen geradlinig ausgebildet sind.

6. Luftsackmodul nach einem der vorhergehenden Ansprüche,
**dadurch gekennzeichnet,**
**dass** die übereinander liegenden Lagen eines die Montageöffnung (14) umfassenden Bereiches (22) der Luftsackhülle (12) durch zumindest ein Befestigungsmittel (20), insbesondere eine Naht, miteinander verbunden sind.

7. Luftsackmodul nach Anspruch 6,
**dadurch gekennzeichnet,**
**dass** der die Montageöffnung (14) umfassende Bereich (22) der Luftsackhülle (12) durch das Befestigungsmittel (20) vollständig von der übrigen Luftsackhülle (12) abgetrennt ist.

8. Luftsackmodul nach einem der vorhergehenden Ansprüche,
**dadurch gekennzeichnet,**
**dass** zumindest eine Lage der Luftsackhülle (12) als Hitzeschild und/oder Diffusor ausgebildet ist.

9. Luftsackmodul nach einem der vorhergehenden Ansprüche,
**dadurch gekennzeichnet,**
**dass** die Luftsackhülle (12) zumindest eine Durchführung (16) für wenigstens einen insbesondere laschenartigen Befestigungsabschnitt (36, 38) des Gasgenerators (34) aufweist.

10. Luftsackmodul nach Anspruch 9,
**dadurch gekennzeichnet,**
**dass** wenigstens eine Durchführung (16) mit der Montageöffnung (14) zusammenfällt.

11. Luftsackmodul nach Anspruch 9 oder 10,
**dadurch gekennzeichnet,**
**dass** die Durchführung (16) zumindest in einer Lage der Luftsackhülle (12) einen zusätzlichen Einschnitt oder Schlitz (32) umfasst, der in eine um einen Winkel insbesondere von 90 Grad gegenüber dem in dieser Lage ausgebildeten Einschnitt oder Schlitz (30) gedrehte Richtung orientiert ist.

12. Luftsackmodul nach einem der Ansprüche 9 bis 11,
**dadurch gekennzeichnet,**
**dass** der Gasgenerator (34) durch die Montageöffnung (14) in die Luftsackhülle (12) eingeführt ist, wobei wenigstens ein an dem Gasgenerator (34) ausgebildeter Befestigungsabschnitt (36, 38) durch die Durchführung (16) der Luftsackhülle (12) hindurch nach außen ragt.

## Claims

1. Airbag module for motor vehicles having at least one airbag (10) which includes an airbag casing (12) and at least one mounting opening (14) formed in the airbag casing (12) for the passage of at least part of a gas generator (34), the airbag casing (12) having at least two layers located one above the other in at least one area, in which are provided incisions or slots (30) which together form the mounting opening (14), **characterised in that** the incisions or slots (30) are oriented differently and/or offset from each other.

2. Airbag module according to claim 1, **characterised in that** the incisions or slots (30) are arranged crossing over each other at at least one point.

3. Airbag module according to claim 1 or 2, **characterised in that** the incisions or slots (30) of layers located one above the other are oriented alternately in a first direction and a second direction turned by an angle in particular of 90 degrees relative to the first direction.

4. Airbag module according to any of the preceding claims, **characterised in that** the incisions or slots (30) of layers which are next but one to each other are formed in register in at least one area, the incisions or slots (30) of adjacent layers being arranged crossing over each other at at least one point, in particular the centres of the incisions or slots (30).

5. Airbag module according to any of the preceding claims, **characterised in that** the incisions or slots (30) are at least substantially rectilinear.

6. Airbag module according to any of the preceding claims, **characterised in that** the layers located one above the other of an area (22) of the airbag casing (12) comprising the mounting opening (14) are joined together by at least one fastening means (20), in particular a seam.

7. Airbag module according to claim 6, **characterised in that** the area (22) of the airbag casing (12) which comprises the mounting opening (14) is completely separated from the remainder of the airbag casing (12) by the fastening means (20).

8. Airbag module according to any of the preceding claims, **characterised in that** at least one layer of the airbag casing (12) is designed as a heat shield and/or diffuser.

9. Airbag module according to any of the preceding claims, **characterised in that** the airbag casing (12) has at least one duct (16) for at least one in particular lug-like fastening section (36, 38) of the gas generator (34).

10. Airbag module according to claim 9, **characterised in that** at least one duct (16) coincides with the mounting opening (14).

11. Airbag module according to claim 9 or 10, **characterised in that** at least in one layer of the airbag casing (12) the duct (16) includes an additional incision or slot (32) which is oriented in a direction turned through an angle in particular of 90 degrees relative to the incision or slot (30) formed in this layer.

12. Airbag module according to any of claims 9 to 11, **characterised in that** the gas generator (34) is introduced through the mounting opening (14) into the airbag casing (12), at least one fastening section (36, 38) formed on the gas generator (34) extending outwards through the duct (16) of the airbag casing (12).

## Revendications

1. Module de coussin gonflable pour véhicules automobiles, comprenant au moins un coussin gonflable (10) qui comporte une enveloppe de coussin (12) et au moins une ouverture de montage (14) ménagée dans l'enveloppe de coussin (12) pour la traversée d'au moins une partie d'un générateur de gaz (34), dans lequel l'enveloppe de coussin (12) comprend au moins deux couches disposées au moins par zones l'une au-dessus de l'autre, dans lesquelles sont prévues des entailles ou des fentes (30) qui forment conjointement l'ouverture de montage,
**caractérisé en ce que** les entailles ou les fentes (30) sont orientées de façon différente et/ou décalées les unes par rapport aux autres.

2. Module de coussin gonflable selon la revendication 1,
**caractérisé en ce que** les entailles ou les fentes (30) sont agencées de manière à se croiser les unes les autres en au moins un point.

3. Module de coussin gonflable selon la revendication 1 ou 2,
**caractérisé en ce que** les entailles ou les fentes (30) dans des couches disposées les unes au-dessus des autres sont orientées alternativement dans une première direction et dans une deuxième direction tournée d'un certain angle par rapport à la première direction, en particulier de 90°.

4. Module de coussin gonflable selon l'une des revendications précédentes,
**caractérisé en ce que** les entailles ou les fentes (30) dans une couche sur deux sont réalisées au moins par zones de façon coïncidente, et **en ce que** les entailles ou les fentes (30) de couches voisines sont agencées de manière à se croiser les unes les autres en au moins un point, en particulier les points centraux des entailles ou des fentes (30).

5. Module de coussin gonflable selon l'une des revendications précédentes,
**caractérisé en ce que** les entailles ou les fentes (30) sont réalisées au moins sensiblement en ligne droite.

6. Module de coussin gonflable selon l'une des revendications précédentes,
**caractérisé en ce que** les couches disposées les unes au-dessus des autres d'une zone (22) de l'enveloppe de coussin (12) qui entoure l'ouverture de montage (14) sont reliées les unes aux autres par au moins un moyen de fixation (20), en particulier une couture.

7. Module de coussin gonflable selon la revendication 6,
**caractérisé en ce que** la zone (22) de l'enveloppe de coussin (12) qui entoure l'ouverture de montage (14) est entièrement séparée du reste de l'enveloppe de coussin (12) par le moyen de fixation (20).

8. Module de coussin gonflable selon l'une des revendications précédentes,
**caractérisé en ce qu'**au moins une couche de l'enveloppe de coussin (12) est réalisée comme bouclier thermique et/ou comme diffuseur.

9. Module de coussin gonflable selon l'une des revendications précédentes,
**caractérisé en ce que** l'enveloppe de coussin (12) comporte au moins une traversée (16) pour au moins un tronçon de fixation (36, 38), en particulier semblable à une patte, du générateur de gaz (34).

10. Module de coussin gonflable selon la revendication 9,
**caractérisé en ce qu'**au moins une traversée (16) coïncide avec l'ouverture de montage (14).

11. Module de coussin gonflable selon la revendication 9 ou 10,
**caractérisé en ce que** la traversée (16) dans au moins une couche de l'enveloppe de coussin (12) comprend une entaille ou une fente supplémentaire (32) qui est orientée, par rapport à l'entaille ou la fente (30) réalisée dans cette couche, dans une direction tournée d'un certain angle, en particulier de 90°.

12. Module de coussin gonflable selon l'une des revendications 9 à 11,
**caractérisé en ce que** le générateur de gaz (34) est introduit à travers l'ouverture de montage (14) dans l'enveloppe de coussin (12), et **en ce qu'**au moins un tronçon de fixation (36, 38) réalisé sur le générateur de gaz (34) dépasse vers l'extérieur en traversant la traversée (16) de l'enveloppe de coussin (12).
